# FASCICULE DE BREVET EUROPEEN

(11) **EP 3 769 065 B1**
(45) Date de publication et mention de la délivrance du brevet: **16.03.2022**
(21) Numéro de dépôt: 19716968.3
(22) Date de dépôt: 19.03.2019
(51) Int. Cl.: G01M 3/22, B65D 90/50, G01M 3/20

(54) **PROCEDE DE DIFFUSION D'UN GAZ TRACEUR ET PROCEDE DE TEST DE L'ETANCHEITE D'UNE MEMBRANE**
VERFAHREN ZUR DIFFUSION EINES TRACERGASES UND VERFAHREN ZUR DICHTHEITSPRÜFUNG EINER MEMBRAN
METHOD FOR DIFFUSING A TRACER GAS AND METHOD FOR LEAK TESTING A MEMBRANE

(30) Priorité: 21.03.2018 FR 1852400
(43) Date de publication de la demande: 27.01.2021
(73) Titulaire: Gaztransport et Technigaz, 78470 Saint-Rémy-lès-Chevreuse (FR)
(72) Inventeur: FRAYSSE, Vincent, 78470 Saint Remy Les Chevreuse (FR); HASSLER, David, 78470 Saint Remy Les Chevreuse (FR); GIMBERT, Charles, 78470 Saint Remy Les Chevreuse (FR); DELETRE, Bruno, 78470 Saint Remy Les Chevreuse (FR)
(74) Mandataire: Loyer & Abello
(86) Numéro de dépôt international: PCT/FR2019/050622
(87) Numéro de publication internationale: WO 2019/180372

(56) Documents cités:
- FR-A1- 2 234 513
- FR-A1- 2 317 649
- FR-A1- 2 662 800
- FR-A5- 2 032 510
- JP-A- 2008 241 265
- TW-B- 527 487
- US-A- 4 413 503

## Description

### Domaine technique

L'invention se rapporte au domaine des cuves, étanches et thermiquement isolantes, à membranes, pour le stockage et/ou le transport d'un fluide, tel qu'un fluide cryogénique.

L'invention se rapporte plus particulièrement à un procédé de test de l'étanchéité d'une membrane étanche d'une cuve au moyen d'un gaz traceur et à un procédé de diffusion d'un gaz traceur.

### Arrière-plan technologique

Le document KR1020100050128 divulgue un procédé de test de l'étanchéité d'une membrane d'une cuve étanche et thermiquement isolante de stockage de GNL.

La cuve comporte une structure multicouche et présente successivement, depuis l'extérieur vers l'intérieur, un espace isolant secondaire, une membrane d'étanchéité secondaire, un espace isolant primaire et une membrane d'étanchéité primaire destinée à être en contact avec le gaz naturel liquéfié contenu dans la cuve .Le procédé vise plus particulièrement à détecter des fuites au travers des cordons de soudure qui permettent de relier de manière étanche les tôles métalliques de la membrane d'étanchéité primaire. Le procédé prévoit d'injecter un gaz traceur dans l'espace isolant primaire puis de déplacer un équipement de détection équipé d'un analyseur de gaz traceur, à l'intérieur de la cuve, le long des cordons de soudure de la membrane d'étanchéité primaire. Ainsi, si l'équipement de détection détecte la présence du gaz traceur, il peut être conclu à un défaut d'étanchéité de la membrane d'étanchéité primaire. Dans un tel procédé, l'injection du gaz traceur dans l'espace isolant primaire est critique puisque le procédé de détection ne peut garantir des résultats fiables que si le gaz traceur a diffusé de manière homogène dans l'intégralité de l'espace isolant primaire.

FR2317649 divulgue un procédé d'injection d'un gaz traceur selon le préambule de la revendication 1.

### Résumé

Une idée à la base de l'invention est de proposer un procédé de diffusion de gaz traceur qui permette d'obtenir une diffusion fiable du gaz traceur dans tout l'espace thermiquement isolant.

Un mode de réalisation de l'invention est donné par un procédé selon la revendication 1.

Selon l'invention, le gaz traceur est introduit et transporté depuis l'espace interne de la cuve vers ledit espace thermiquement isolant.

On entend par l'expression « espace interne de la cuve » la zone fonctionnelle de la cuve, à savoir son espace de stockage d'un fluide, tel qu'un fluide cryogénique, par opposition à la zone externe, ou extérieure, de la cuve.

Classiquement, le gaz traceur est transporté et introduit dans l'espace thermiquement isolant par ou via la zone externe, ou extérieure, de la cuve, ce qui présente un certain nombres d'inconvénients - dont ceux présentés précédemment - lorsqu'on cherche en particulier à réaliser un test d'étanchéité de la susdite membrane, pour s'assurer en particulier que le fluide, contenu dans la cuve, ne risque de pénétrer dans l'espace thermiquement isolant.

Le gaz traceur présentant une densité de vapeur plus faible que celle de l'air, il monte dans l'espace thermiquement isolant. Dès lors, l'injection du gaz traceur par le bas, au travers de la membrane de la paroi de fond permet d'assurer une diffusion du gaz traceur dans l'espace thermiquement isolant plus rapide et plus homogène que lorsque le gaz traceur est injecté au travers d'une canalisation passant au travers d'un dôme ménagé dans la paroi de plafond de la cuve, tel que pratiqué dans l'art antérieur.

Selon des modes de réalisation, un tel procédé d'injection d'un gaz traceur peut comporter une ou plusieurs des caractéristiques suivantes.

Selon un mode de réalisation, lors de la mise en œuvre du procédé d'injection, chacune des parois comporte depuis l'extérieur vers l'intérieur de la cuve, une barrière thermiquement isolante secondaire reposant contre la structure porteuse, une membrane secondaire reposant contre la barrière thermiquement isolante secondaire, et optionnellement une barrière thermiquement isolante primaire reposant contre la membrane secondaire et une membrane primaire qui repose contre la barrière thermiquement isolante primaire et qui est destinée à être en contact avec le gaz liquéfié contenu dans la cuve.

Selon un mode de réalisation, les barrières thermiquement isolantes secondaires des parois de cuve communiquent les unes avec les autres et définissent ensemble un espace thermiquement isolant secondaire et l'on injecte un gaz traceur dans l'espace thermiquement isolant secondaire au moyen d'au moins un dispositif d'injection de gaz traceur qui traverse la membrane secondaire de la paroi de fond et qui débouche dans la barrière thermiquement isolante secondaire de la paroi de fond.

Selon un autre mode de réalisation, les barrières thermiquement isolantes primaires des parois de cuve communiquent les unes avec les autres et définissent ensemble un espace thermiquement isolant primaire et l'on injecte un gaz traceur dans l'espace thermiquement isolant primaire au moyen d'au moins un dispositif d'injection de gaz traceur qui traverse la membrane primaire de la paroi de fond et qui débouche dans la barrière thermiquement isolante primaire de la paroi de fond.

Selon un mode de réalisation, l'on injecte le gaz traceur exclusivement au moyen de dispositifs d'injection du gaz traceur qui traversent la membrane de la paroi de fond et qui débouchent dans la barrière thermiquement isolante de la paroi de fond.

Selon un mode de réalisation, l'espace thermiquement isolant est mis en dépression avant l'étape d'injecter du gaz traceur dans l'espace thermiquement isolant. Ceci permet d'une part, une meilleure diffusion du gaz traceur et, d'autre part, d'atteindre un niveau de concentration du gaz traceur satisfaisant plus rapidement.

Selon un mode de réalisation, l'espace thermiquement isolant est mis en dépression jusqu'à une dépression de consigne comprise entre -40 kPa et -80 kPa, par exemple de l'ordre de -60 kPa.

Selon un mode de réalisation, le gaz traceur est injecté dans l'espace thermiquement isolant jusqu'à ce que la pression à l'intérieur dudit l'espace thermiquement isolant soit légèrement supérieure à la pression atmosphérique, par exemple comprise entre 1 et 6 kPa relatif et avantageusement de l'ordre de 2 kPa relatif. Ceci permet, d'une part, de mettre l'espace thermiquement isolant en surpression afin de favoriser la migration du gaz traceur à travers les soudures défectueuses de la membrane de manière à augmenter l'efficacité du test d'étanchéité de la membrane et, d'autre part, de rester dans une plage de surpression inférieure aux surpressions maximales susceptibles d'être admises par le membrane afin d'éviter qu'elle ne s'arrache.

Selon un mode de réalisation, le gaz traceur présente une densité de vapeur inférieure à celle de l'air.

Selon un mode de réalisation, le gaz traceur est choisi parmi l'hélium, l'ammoniac et un mélange d'azote et de dihydrogène.

Selon un mode de réalisation, le gaz traceur est injecté sous la forme d'un mélange comportant en outre de l'air et/ou de l'azote.

Selon un mode de réalisation, la paroi de fond présente une forme rectangulaire présentant deux axes de symétries, lesdits deux axes de symétrie délimitant quatre zones de la paroi de fond et l'on injecte le gaz traceur au moyen d'au moins quatre dispositifs d'injection de gaz traceur qui chacun traversent la membrane de la paroi de fond et qui débouchent dans la barrière thermiquement isolante de la paroi de fond, chacune des quatre zones de la paroi de fond étant équipée de l'un des quatre dispositifs d'injection de gaz traceur.

Selon un mode de réalisation, chacun des quatre dispositifs d'injection traverse la membrane d'étanchéité à proximité du centre de la zone de la paroi de fond respective.

Selon un mode de réalisation, chaque dispositif d'injection de gaz traceur comporte un organe de raccordement qui est soudé de manière étanche à la membrane de la paroi de fond en périphérie d'un trou qui est ménagé dans ladite membrane, l'organe de raccordement étant associé à un conduit relié à une source de gaz traceur.

Selon un mode de réalisation, l'organe de raccordement comporte un raccord tubulaire qui est associé au conduit relié à la source de gaz traceur et un anneau métallique qui est, d'une part, soudé de manière étanche à la membrane de la paroi de fond, en périphérie du trou qui est ménagé dans ladite membrane et, d'autre part, soudé de manière étanche au raccord tubulaire.

Selon un mode de réalisation, préalablement à l'étape d'injecter du gaz traceur au moyen d'au moins un dispositif d'injection, l'on décolle la membrane de la barrière thermiquement isolante dans la zone du dispositif d'injection du gaz traceur en introduisant un outil de levage au travers de l'organe de raccordement et du trou ménagé dans la membrane et en positionnant ledit outil de levage de telle sorte qu'un crochet dudit outil de levage soit intercalé entre la membrane et la barrière thermiquement isolante de la paroi de fond.

Selon un mode de réalisation, l'outil de levage est maintenue dans une position dans laquelle le crochet est intercalé entre la membrane et barrière thermiquement isolante de la paroi de fond pendant l'étape d'injecter du gaz traceur au moyen d'au moins un dispositif d'injection.

Selon un mode de réalisation, chaque dispositif d'injection comporte en outre au moins un tuyau d'injection qui est relié de manière étanche au trou qui est ménagé dans ladite membrane, ledit tuyau d'injection s'étendant à l'intérieur d'une ondulation de la membrane et comprenant au moins un perçage au niveau de chaque croisement entre l'ondulation dans laquelle ledit tuyau d'injection s'étend et une ondulation perpendiculaire.

Une autre idée à la base de l'invention est de proposer un procédé de test de l'étanchéité d'une membrane qui soit fiable et rapide à mettre en œuvre.

Selon un mode de réalisation, l'invention fournit un procédé de test de l'étanchéité d'une membrane d'une cuve étanche et thermiquement isolante, la cuve étanche et thermiquement isolante présentant une forme polyédrique définie par une pluralité de parois de cuve qui sont fixées sur une structure porteuse, chacune des parois de cuve comportant une barrière thermiquement isolante comprenant des éléments isolants ancrés à la structure porteuse et une membrane reposant contre les éléments isolants de la barrière thermiquement isolante, les barrières thermiquement isolantes des parois de cuve communicant les unes avec les autres et définissant ensemble l'espace thermiquement isolant ; le procédé de test de l'étanchéité comportant :
- injecter du gaz traceur dans l'espace thermiquement isolant ;
- fournir un dispositif de détection de fuite comprenant une cloche de détection configurée pour définir avec la membrane une chambre de détection étanche et une pompe à vide qui est, d'une part, raccordée à la chambre de détection et, d'autre part, à un équipement d'analyse ;
- disposer la cloche de détection contre une face de la membrane opposée à l'espace thermiquement isolant, la cloche de détection étant disposée de manière à ce que la chambre de détection soit disposée en regard d'une portion d'un cordon de soudure à tester ;
- mettre en dépression la chambre de détection au moyen de la pompe à vide ;
- conduire la phase gazeuse contenue dans la chambre de détection vers l'équipement d'analyse ; et
- analyser au moyen de l'équipement d'analyse ladite phase gazeuse et délivrer une variable représentative d'une concentration de gaz traceur dans ladite phase gazeuse.

Selon un mode de réalisation, l'invention fournit un dispositif de détection de fuite pour tester l'étanchéité d'une membrane d'une cuve étanche et thermiquement isolante ; le dispositif de détection de fuite comprenant une cloche de détection configurée pour définir avec la membrane une chambre de détection étanche et une pompe à vide qui est, d'une part, raccordé à la chambre de détection et, d'autre part, à un équipement d'analyse.

Selon des modes de réalisation, le procédé de test de l'étanchéité d'une membrane et/ou le dispositif de détection de fuite peuvent comporter une ou plusieurs des caractéristiques suivantes.

Selon un mode de réalisation, l'injection du gaz traceur dans l'espace thermiquement isolant est mise en œuvre au moyen du procédé d'injection d'un gaz traceur précité. Toutefois, selon un autre mode de réalisation, l'injection du gaz traceur dans l'espace thermiquement isolant peut également être mise en oeuvre selon un autre procédé.

Selon un mode de réalisation, l'équipement d'analyse est un spectromètre de masse.

Selon un mode de réalisation, la cloche de détection présente une forme allongée.

Selon un mode de réalisation, la cloche de détection comporte un noyau central et un joint d'étanchéité qui sont fixés l'un à l'autre et sont agencés pour définir avec la membrane à tester la chambre de détection.

Selon un mode de réalisation, le joint d'étanchéité comporte une enveloppe fixée au noyau central et une lèvre d'étanchéité périphérique qui prolonge l'enveloppe.

Selon un mode de réalisation, l'enveloppe du joint d'étanchéité présente un fond qui recouvre la surface supérieure du noyau central et une paroi périphérique qui épouse la périphérie du noyau central.

Selon un mode de réalisation, la lèvre d'étanchéité périphérique est recourbée vers l'extérieur de la cloche de détection et est configurée pour se fléchir et se plaquer contre la membrane lorsque la chambre de détection est mise en dépression.

Selon un mode de réalisation, la portion du cordon de soudure est traversée par au moins une ondulation de la membrane.

Selon un mode de réalisation, la lèvre d'étanchéité périphérique est conformée pour s'adapter à la géométrie de ladite au moins une ondulation.

Selon un mode de réalisation, la portion du cordon de soudure est traversée par au moins deux ondulations, par exemple trois ondulations, parallèles de la membrane et la lèvre d'étanchéité périphérique est conformée pour s'adapter à la géométrie desdites ondulations.

Selon un mode de réalisation, la lèvre d'étanchéité périphérique comporte au moins deux échancrures présentant une forme correspondant à celle d'une ondulation de la membrane faisant saillie vers l'intérieur de la cuve, lesdites échancrures étant destinées à enjamber ladite ondulation.

Selon un mode de réalisation, l'au moins une ondulation de la membrane fait saillie vers l'intérieur de la cuve, la cloche de détection étant disposée contre la membrane de manière à ce que les échancrures enjambent l'ondulation.

Selon un mode de réalisation, la lèvre d'étanchéité périphérique comporte au moins deux zones en saillie présentant une forme correspondant à celle d'une ondulation de la membrane faisant saillie vers l'extérieur de la cuve.

Selon un mode de réalisation, la cloche de détection est disposée contre la membrane de manière à ce que les zones en saillie s'insèrent dans l'ondulation.

Selon un mode de réalisation, le joint d'étanchéité est réalisé dans un matériau élastomère présentant une dureté comprise entre 20 et 50 Shore A.

Selon un mode de réalisation, le matériau élastomère du joint d'étanchéité est choisi parmi le polyuréthane élastomère, le silicone, le nitrile et le Viton ^{®}.

Selon un mode de réalisation, la cloche de détection est équipée d'un système de serrage apte à plaquer la lèvre d'étanchéité périphérique contre la membrane à tester.

Selon un mode de réalisation, préalablement à la mise en dépression de la chambre de détection, l'on actionne le système de serrage de manière à garantir l'étanchéité de la chambre de détection.

Selon un mode de réalisation, lorsque le joint d'étanchéité comporte au moins deux échancrures présentant une forme correspondant à celle d'une ondulation de la membrane faisant saillie vers l'extérieur de la cuve et traversant la portion du cordon de soudure, le système de serrage comporte une pince au niveau de chacune des échancrures, chaque pince comportant deux branches respectivement disposées de part et d'autre de l'échancrure et configurées pour venir appliquer un effort de serrage de la lèvre d'étanchéité périphérique contre l'ondulation de la membrane.

Selon un mode de réalisation, l'on met en dépression la chambre de détection jusqu'à une valeur de pression absolue comprise entre 50 et 1000 Pa, par exemple de l'ordre de 100 Pa absolu.

Selon un mode de réalisation, l'on analyse la phase gazeuse pendant une durée supérieure ou égale à 5 secondes.

Selon un mode de réalisation, l'on compare la variable représentative d'une concentration de gaz traceur dans ladite phase gazeuse à un seuil et l'on détermine que l'étanchéité de la portion du cordon de soudure est défectueuse lorsque la variable représentative d'une concentration de gaz traceur dans ladite phase gazeuse est supérieure audit seuil.

Selon un mode de réalisation, le dispositif de détection de fuite comporte en outre une chambre d'homogénéisation qui est disposée entre la chambre de détection et l'équipement d'analyse, la cloche de détection comportant une entrée de gaz équipée d'un robinet, la chambre d'homogénéisation et l'entrée de gaz étant raccordées à deux extrémités opposées de la chambre de détection.

Selon un mode de réalisation, le robinet de l'entrée de gaz est fermé lors de la mise en dépression de la chambre de détection, l'étape de conduire la phase gazeuse contenue dans la chambre de détection comportant :
- ouvrir le robinet de l'entrée de gaz et conduire la phase gazeuse contenue dans la chambre de détection vers la chambre d'homogénéisation ; et
- conduire la phase gazeuse de la chambre d'homogénéisation vers l'équipement d'analyse.

Selon un mode de réalisation, l'invention fournit un procédé de contrôle de la diffusion du gaz traceur dans l'espace thermiquement isolant.

Selon un mode de réalisation, le procédé de contrôle de la diffusion du gaz traceur est mis en œuvre au cours du procédé de test de l'étanchéité précité. Toutefois, dans un autre mode de réalisation, il peut également être mis en oeuvre de manière indépendante.

Selon un mode de réalisation, le contrôle de la diffusion du gaz traceur dans l'espace thermiquement isolant comporte :
- prélever du gaz contenu dans l'espace thermiquement isolant au moyen d'une pluralité de dispositifs de prélèvement traversant chacun la membrane de l'une des parois de cuve ; et
- conduire le gaz prélevé vers un équipement d'analyse, tel qu'un spectromètre de masse par exemple.

Selon un mode de réalisation, les dispositifs de prélèvement sont avantageusement disposés à proximité de zones d'angle formées à la jonction entre deux ou trois parois de cuve.

Selon un mode de réalisation, chaque dispositif de prélèvement de gaz comporte une plaque de recouvrement qui est associée à une membrane au moyen d'un cordon de mastic entourant une zone de la membrane dépourvue de soudure à la jonction entre deux éléments de la membrane, la plaque de recouvrement présentant un trou et un raccord destiné à être raccordé à un conduit relié à l'équipement d'analyse, ledit raccord étant soudé de manière étanche en périphérie du trou de la plaque de recouvrement.

Selon un mode de réalisation, le dispositif de prélèvement de gaz comporte un organe de raccordement qui présente un embout destiné à être raccordé de manière étanche à un conduit relié à l'équipement d'analyse, un épaulement et une tige inférieure filetée qui fait saillie depuis l'épaulement, traverse la membrane secondaire et est vissée dans un alésage fileté ménagé dans une platine fixée sur la barrière thermiquement isolante; le dispositif de prélèvement de gaz comportant en outre un joint d'étanchéité annulaire qui est enfilé sur la tige inférieure et qui est pris en sandwich entre la membrane secondaire et l'épaulement, l'organe de raccordement présentant un perçage qui débouche, d'une part, au niveau de l'embout et d'autre part, dans l'espace thermiquement isolant.

### Brève description des figures

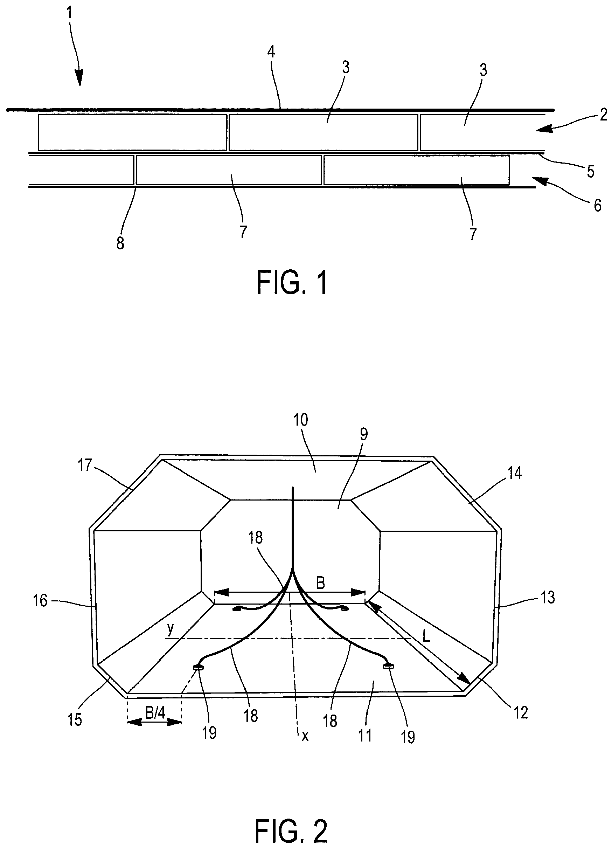

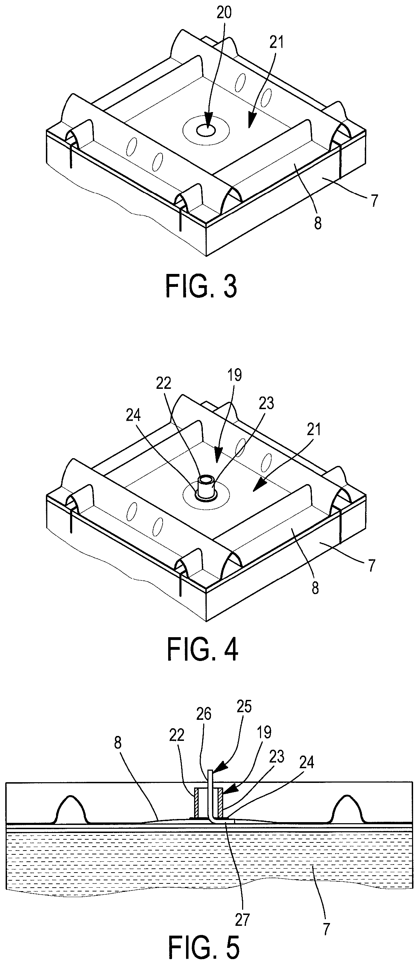

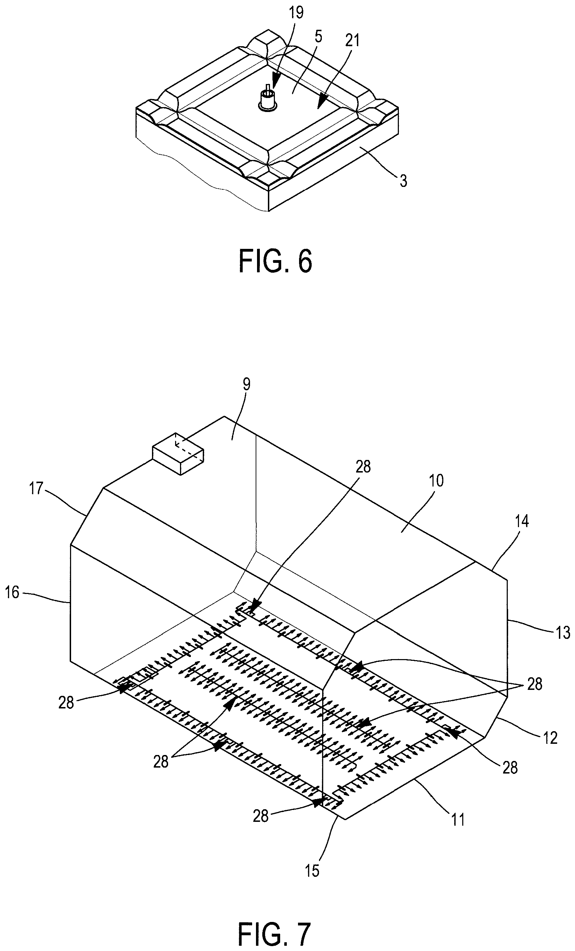

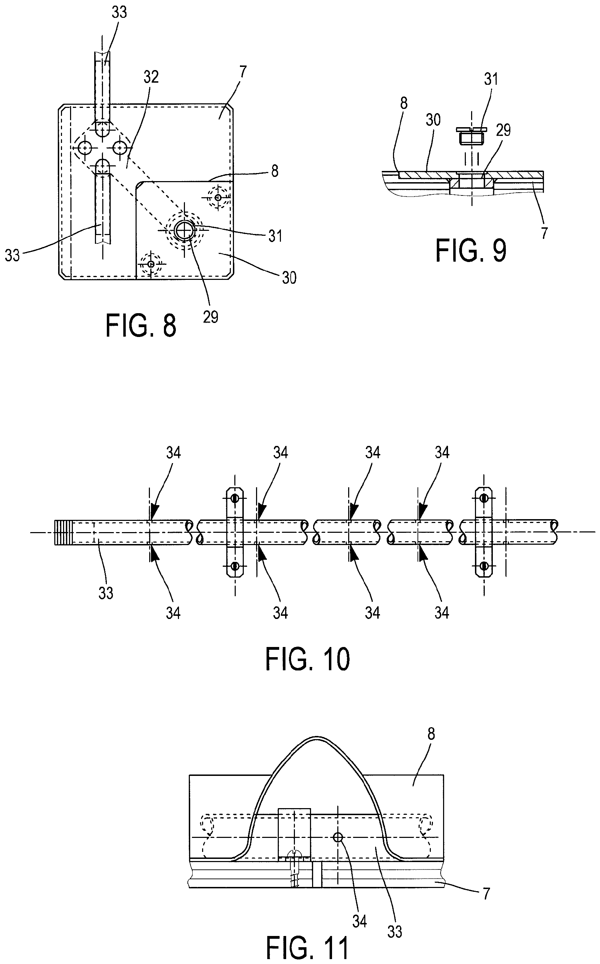

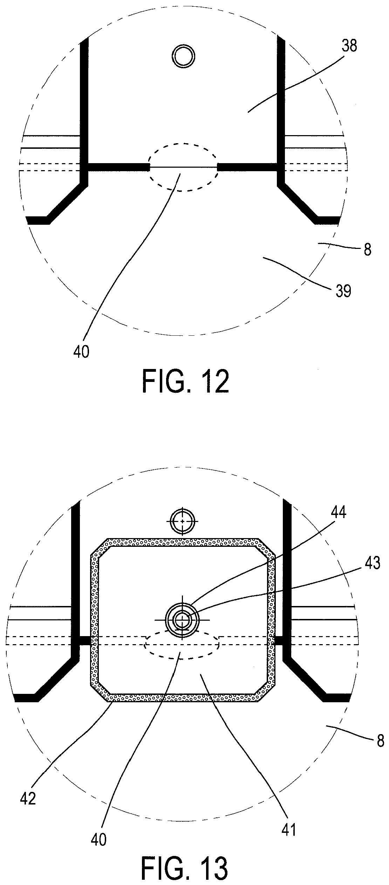

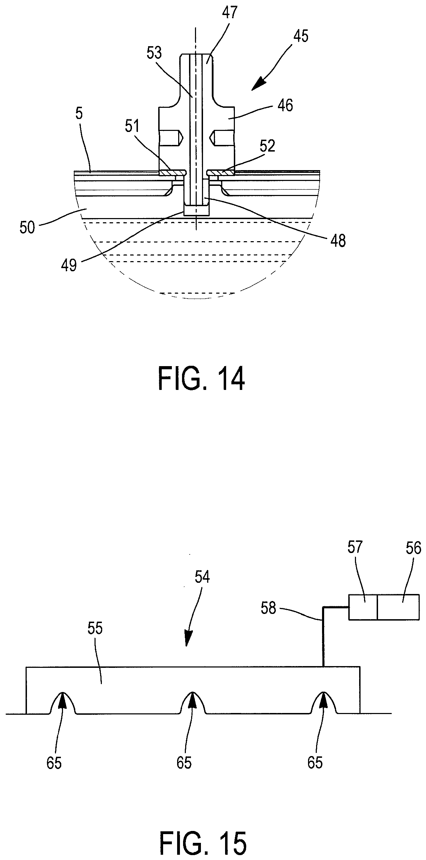

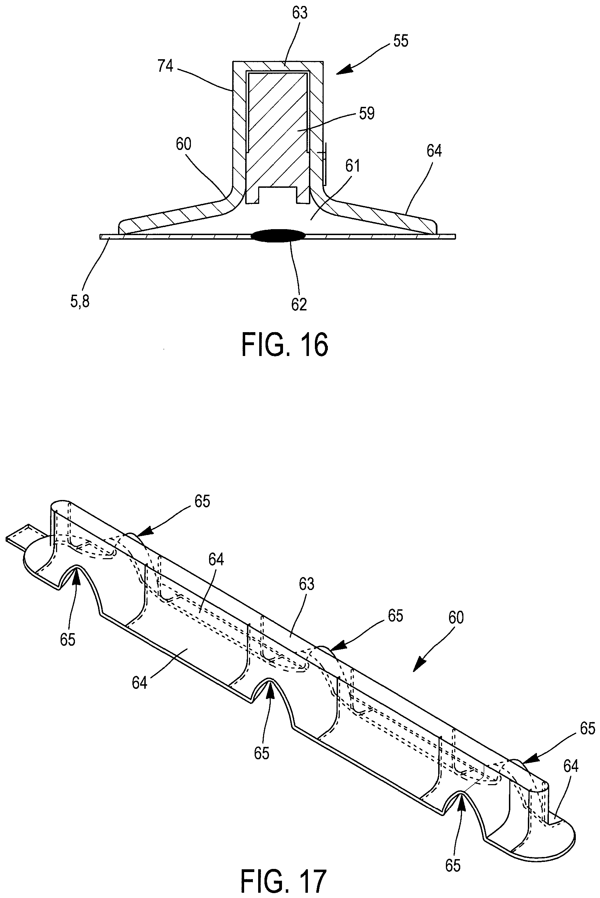

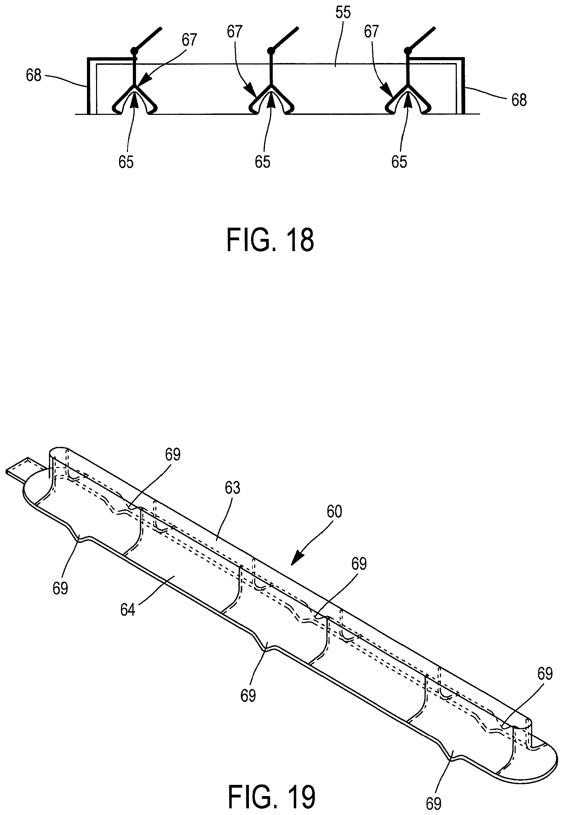

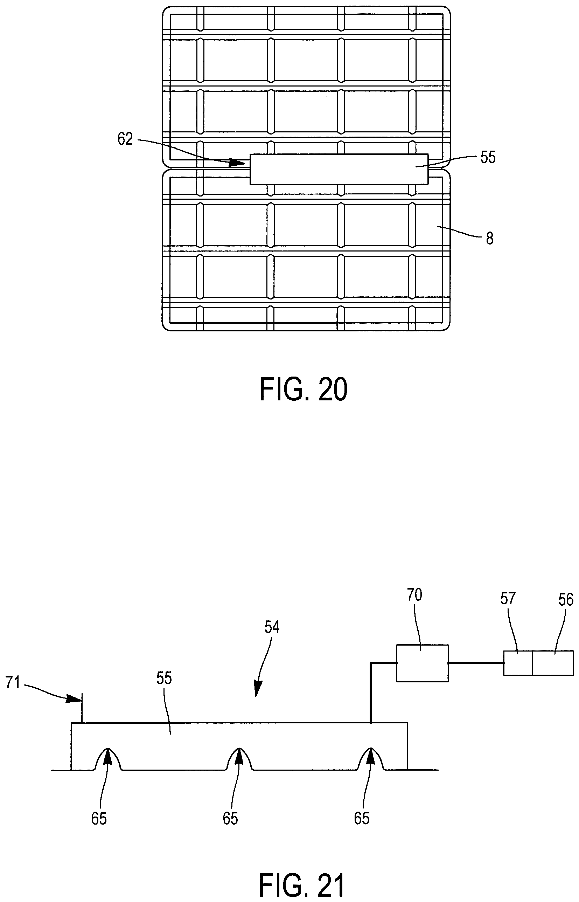

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une illustration schématique d'une structure multicouche d'une paroi d'une cuve à membranes.
- **La** **figure 2** est une vue schématique partielle d'une cuve étanche et thermiquement isolante illustrant des dispositifs d'injection de gaz traceur positionnés au travers d'une membrane de la paroi de fond de la cuve.
- **La** **figure 3** est une vue détaillée en perspective d'un trou ménagé au travers de la membrane d'une paroi de fond de la cuve.
- **La** **figure 4** est une vue détaillée en perspective d'un dispositif d'injection de gaz traceur selon un premier mode de réalisation.
- **La** **figure 5** est une vue en coupe du dispositif d'injection de gaz traceur de la figure 4 et d'un outil de levage introduit au travers du dispositif d'injection de manière à décoller la membrane de la barrière thermiquement isolante.
- **La** **figure 6** est une vue en perspective d'un dispositif d'injection de gaz traceur selon un mode de réalisation.
- **La** **figure 7** est une vue schématique en perspective d'une cuve illustrant la disposition de dispositifs d'injection de gaz traceur selon un second mode de réalisation.
- **La** **figure 8** est une vue détaillée de dessus illustrant une ouverture, un raccord tubulaire et un organe de distribution multivoies d'un dispositif d'injection de gaz traceur selon le second mode de réalisation.
- **La** **figure 9** est une vue en coupe illustrant une ouverture et un raccord tubulaire d'un dispositif d'injection selon le second mode de réalisation.
- **La** **figure 10** est une vue partielle d'un tuyau d'injection d'un dispositif d'injection de gaz traceur selon le second mode de réalisation.
- **La** **figure 11** est une vue en coupe du tuyau d'injection de la figure 10 dans une zone de croisement entre deux ondulations de la membrane.
- **La** **figure 12** est une vue de dessus d'une zone dépourvue de soudure à la jonction entre deux tôles d'une membrane et destinée à recevoir un dispositif de prélèvement de gaz selon un premier mode de réalisation.
- **La** **figure 13** est une vue de dessus d'un dispositif de prélèvement de gaz destiné à être disposé dans la zone dépourvue de soudure illustrée sur la figure 12.
- **La** **figure 14** est une vue en coupe d'un dispositif de prélèvement de gaz selon un seconde mode de réalisation.
- **La** **figure 15** est une vue schématique d'un dispositif de détection de fuite selon un premier mode de réalisation.
- **La** **figure 16** est une vue en coupe transversale de la cloche de détection du dispositif de détection de fuite de la figure 15.
- **La** **figure 17** est une vue en perspective d'un joint d'étanchéité selon un premier mode de réalisation.
- **La** **figure 18** est une vue schématique d'une variante d'un dispositif de détection de fuite dans laquelle la cloche de détection est équipée d'un système de serrage
- **La** **figure 19** est une vue en perspective d'un joint d'étanchéité selon un deuxième mode de réalisation.
- **La** **figure 20** illustre schématiquement le positionnement de la cloche de détection en regard d'une portion d'un cordon de soudure assurant l'étanchéité entre deux tôles métalliques ondulées adjacentes d'une membrane.
- **La** **figure 21** est une vue schématique d'un dispositif de détection de fuite selon un deuxième mode de réalisation.

### Description détaillée de modes de réalisation

Le procédé de test d'étanchéité qui sera décrit par la suite vise plus particulièrement à tester l'étanchéité d'une membrane d'une cuve étanche et thermiquement isolante à membranes. A titre d'exemple, de telles cuves à membranes sont notamment décrites dans les demandes de brevet WO14057221, FR2691520 qui portent respectivement sur les technologies Mark V et Mark III.

Les cuves à membrane présentent une pluralité de parois qui présentent une structure multicouche, telle que représentée sur la figure 1. Chaque paroi 1 comporte, depuis l'extérieur vers l'intérieur de la cuve, une barrière thermiquement isolante secondaire 2 comportant des panneaux isolants secondaires 3 ancrés à une structure porteuse 4, une membrane secondaire 5 reposant contre la barrière thermiquement isolante secondaire 2, une barrière thermiquement isolante primaire 6 comportant des panneaux isolants primaires 7 reposant contre la membrane secondaire 2 et ancrés à la structure porteuse 4 ou aux panneaux isolants secondaires 3 et une membrane primaire 8 qui repose contre la barrière thermiquement isolante primaire 6 et qui est destinée à être en contact avec le gaz liquéfié contenu dans la cuve.

La cuve présente une forme générale polyédrique. Dans le mode de réalisation illustré sur la figure 2, la cuve présente une paroi avant 9 et une paroi arrière, non représentée, qui sont ici de forme octogonale. La cuve comporte également une paroi de plafond 10, une paroi de fond 11 et des parois latérales 11, 12, 13, 14, 15, 16, 17 qui s'étendent selon la direction longitudinale de la cuve entre la paroi avant 9 et la paroi arrière.

Les barrières thermiquement isolantes secondaires 2 des parois de cuve communiquent les unes avec les autres de manière à former, entre la structure porteuse 4 et la membrane secondaire 5, un espace thermiquement isolant secondaire, étanche. De même, les barrières thermiquement isolantes primaires 6 des parois de cuve communiquent les unes avec les autres de manière à former, entre la membrane secondaire 5 et la membrane primaire 8, un espace thermiquement isolant primaire, étanche.

Au moins l'une des membranes primaire 8 et secondaire 5 comporte une pluralité de tôles métalliques qui sont soudées les unes aux autres. Le procédé de test d'étanchéité qui sera décrit par la suite vise plus particulièrement à tester l'étanchéité des soudures permettant de raccorder les tôles métalliques les unes aux autres. Selon un mode de réalisation, la membrane à tester présente des ondulations qui lui permettent de se déformer sous l'effet des sollicitations thermiques et mécaniques générées par le fluide emmagasiné dans la cuve. Pour ce faire, comme représenté par exemple sur la figure 20, chaque tôle métallique comporte deux séries d'ondulations perpendiculaires l'une à l'autre.

Le procédé de test d'étanchéité comporte trois étapes qui seront chacune décrites de manière détaillée par la suite, à savoir :
- La diffusion d'un gaz traceur dans un espace thermiquement isolant recouvert par la membrane 5, 8 dont on souhaite tester l'étanchéité ;
- Le contrôle de la diffusion du gaz traceur dans l'espace thermiquement isolant ; et
- La vérification de l'étanchéité des soudures de la membrane 5, 8.

### Diffusion d'un gaz traceur

Le gaz traceur est injecté dans l'espace thermiquement isolant qui est recouvert par la membrane 5, 8 dont on souhaite vérifier l'étanchéité. Lorsque l'on souhaite vérifier l'étanchéité de la membrane secondaire 5, le gaz traceur est injecté dans l'espace thermiquement isolant secondaire. Dans ce cas, le procédé de test d'étanchéité est mis en oeuvre avant que la barrière thermiquement isolante primaire 7 et la membrane primaire 8 ne soient installées. Lorsque l'on souhaite vérifier l'étanchéité de la membrane primaire 8, le gaz traceur est injecté dans l'espace thermiquement isolant primaire.

Le gaz traceur est par exemple choisi parmi l'hélium, l'ammoniac et un mélange d'azote et de dihydrogène. Selon un mode de réalisation, le gaz traceur est injecté sous la forme d'un mélange comportant en outre de l'air et/ou de l'azote.

De manière avantageuse, afin de faciliter la diffusion du gaz traceur dans l'espace thermiquement isolant, celui-ci est préalablement mis en dépression, jusqu'à atteindre une dépression de consigne comprise entre -40 kPa et -80 kPa, par exemple de l'ordre de -60 kPa.

Pour ce faire, l'espace thermiquement isolant est relié à une pompe à vide, non représentée, apte à aspirer du gaz contenu dans l'espace thermiquement isolant et à le refouler en dehors dudit espace thermiquement isolant. En outre, l'espace thermiquement isolant est équipé d'un ou d'un ou plusieurs capteurs de pression aptes à délivrer un signal représentatif de la pression régnant dans l'espace thermiquement isolant et permettant d'assurer le contrôle de la pompe à vide.

Par la suite, lorsque la pression régnant dans l'espace thermiquement isolant a atteint la dépression de consigne, le gaz traceur est injecté dans l'espace thermiquement isolant jusqu'à ce que la pression à l'intérieur dudit l'espace thermiquement isolant soit légèrement supérieure à la pression atmosphérique, par exemple comprise entre 1 et 6 kPa relatif et avantageusement de l'ordre de 2 kPa relatif.

La figure 2 illustre schématiquement une cuve étanche et thermiquement isolante ainsi qu'un système d'injection du gaz traceur dans un espace thermiquement isolant.

Le système d'injection comporte une pluralité de conduits 18 qui sont, d'une part, reliés à une source de gaz traceur, non illustrée, et, d'autre part, reliés à des dispositifs d'injection du gaz traceur 19 ménageant un passage d'injection du gaz traceur au travers de la membrane 5, 8 dont l'étanchéité doit être testée. Plus particulièrement, les dispositifs d'injection du gaz traceur 19 ménagent des passages de gaz traceur au travers de la membrane de la paroi de fond 11. Une telle disposition est particulièrement avantageuse car le gaz traceur présente une densité de vapeur plus faible que celle de l'air de sorte qu'il a tendance à monter dans l'espace thermiquement isolant. Dès lors, l'injection du gaz traceur par le bas, au travers de la membrane 5, 8 à tester de la paroi de fond 11, permet d'assurer une diffusion rapide et homogène du gaz traceur dans l'espace thermiquement isolant.

Dans le mode de réalisation représenté sur la figure 2, la paroi de fond 11 est équipée d'au moins quatre dispositifs d'injection du gaz traceur 19 qui sont régulièrement répartis sur la surface de la paroi de fond 11. La paroi de fond 11 présente une forme rectangulaire et peut ainsi être divisée en quatre zones de surface égale par ses deux axes de symétrie x et y. Chacun des quatre dispositifs d'injection du gaz traceur 19 est disposé dans l'une des quatre zones précitées. Dans le mode de réalisation particulier illustré, chaque dispositif d'injection du gaz traceur 19 est disposé à proximité du centre de sa zone respective. Dans un mode de réalisation particulier, chacun des quatre dispositifs d'injection du gaz traceur est disposé à une distance ¼ L du bord longitudinal adjacent et à une distance ¼ B du bord transversal adjacent avec L : la dimension longitudinale de la paroi de fond 11 et B : la dimension transversale de la paroi de fond 11.

Les figures 3 à 5 illustrent de manière détaillée un dispositif d'injection du gaz traceur 19 au travers d'une membrane primaire ondulée, de type Mark III ou mark V par exemple. Les ondulations de la membrane primaire 8 font ici saillie en direction de l'intérieur de la cuve. Chaque dispositif d'injection du gaz traceur 19 présente un trou 20, illustré sur la figure 3, ménagé au travers de la membrane primaire 8. Le trou 20 est ménagé dans une zone plane 21 de la membrane primaire, délimitée par deux ondulations s'étendant selon la direction longitudinale de la paroi de fond 11 et par deux ondulations s'étendant selon la direction transversale de la paroi de fond 11. L'orifice est avantageusement placé au centre de ladite zone plane 21.

Comme représenté sur la figure 4, un organe de raccordement 22 est soudé de manière étanche sur la membrane primaire 8 en périphérie du trou 20. L'organe de raccordement 22 comporte un raccord tubulaire 23 destiné à être raccordé à un conduit 18 relié à une source de gaz traceur. Pour ce faire, le raccord tubulaire 23 comporte une extrémité filetée destinée à recevoir un raccord complémentaire associé à un conduit 18 relié à la source de gaz traceur. Le raccord tubulaire 23 est soudé de manière étanche à un anneau métallique 24 qui est lui-même soudé de manière étanche à la membrane primaire 8 tout autour du trou 20 de manière à assurer l'étanchéité du dispositif d'injection de gaz traceur 19.

Selon un mode de réalisation, tel que représenté sur le figure 5, un outil de levage 25 est utilisé afin de décoller la membrane primaire 8 du panneau isolant primaire 7 sur laquelle elle repose, dans la zone d'injection du gaz traceur. Ceci facilite la diffusion du gaz traceur dans l'espace thermiquement isolant primaire. L'outil de levage 25 présente une forme générale de L et comporte un manche 26 et un crochet 27 qui est disposé à l'extrémité du manche 26 et s'étend perpendiculairement audit manche 26. L'outil de levage 25 est introduit au travers de l'organe de raccordement 22 et est disposé de manière à ce que le crochet 27 soit intercalé entre la membrane primaire 8 et la surface du panneau isolant primaire 7 supportant ladite membrane primaire 8. Ceci permet de décoller ladite membrane primaire 8 afin de favoriser la diffusion du gaz traceur.

L'outil de levage 25 est mis en place avant que le conduit 18 relié à la source de gaz traceur ne soit raccordé à l'organe de raccordement 22. En outre, de manière avantageuse, l'outil de levage est maintenue en position lorsque l'organe de raccordement 22 est raccordé à un conduit 18 relié à la source de gaz traceur et que du gaz traceur est injecté dans l'espace thermiquement isolant primaire au travers du dispositif d'injection du gaz traceur 19.

La figure 6 représente un dispositif d'injection de gaz traceur 19 ménagé au travers d'une membrane secondaire 5 ondulée, de type mark V par exemple. Cette membrane secondaire 5, ondulée, diffère notamment de la membrane primaire 8 représentée sur les figures 3 à 5 en ce que les ondulations font saillie vers l'extérieur de la cuve alors qu'elles faisaient saillie en direction de l'intérieur de la cuve sur les figures 3 à 5. Comme dans le mode de réalisation précédent, chaque dispositif d'injection du gaz traceur 19 est disposé dans une zone plane 21 de la membrane délimitée par deux ondulations s'étendant selon la direction longitudinale de la paroi de fond 11 et par deux ondulations s'étendant selon la direction transversale de la paroi de fond 11. Par ailleurs, chaque dispositif d'injection du gaz traceur 19 présente une structure identique à celui représenté et décrit en relation avec les figures 3 à 5. En outre, un outil de levage 25 peut également être utilisé afin de décoller la membrane secondaire 5 du panneau isolant secondaire 3 sur laquelle elle repose, dans la zone d'injection du gaz traceur

Les figures 7 à 11 illustrent des dispositifs d'injection du gaz traceur 28 selon un autre mode de réalisation. Bien que présentant une structure plus complexe que ceux représentés et décrits en relation avec les figures 2 à 5, ces dispositifs d'injection du gaz traceur sont avantageux en ce qu'ils facilitent la diffusion du gaz traceur et sont donc particulièrement adaptés pour l'injection d'un gaz traceur présentant une viscosité importante, tel que l'ammoniac par exemple.

Dans ce mode de réalisation, chaque dispositif d'injection du gaz traceur 28 présente un trou 29, représenté sur les figures 7 et 8, ménagé dans la membrane primaire 8. Dans le mode de réalisation représenté, le trou 29 est ménagé au travers d'une platine métallique 30 qui est fixée sur un panneau isolant primaire 7 de la barrière thermiquement isolante primaire 6 et sur laquelle sont soudées de manière étanche des tôles métalliques ondulées de la membrane primaire 8. Comme représenté sur la figure 9, un organe de raccordement 31 destiné à être raccordé à un conduit 18 relié à une source de gaz traceur est soudé de manière étanche sur la périphérie du trou 29. Par ailleurs, le trou 29 est raccordé de manière étanche à un organe de distribution multivoies 32 qui est disposé dans un logement ménagé dans le panneau isolant primaire 7 et qui est apte à conduire le gaz traceur de l'ouverture 29 vers un ou plusieurs tuyaux d'injection 33. A titre d'exemple, sur la figure 9, l'organe de distribution multivoies 32 est raccordé à deux tuyaux d'injection 33 alignés.

Comme représenté sur les figures 10 et 11, chaque tuyau d'injection 33 est fixé sur un ou plusieurs panneaux isolants primaires 7 de la barrière thermiquement isolant primaire 6 et s'étend à l'intérieur de l'une des ondulations de la membrane primaire 8 faisant saillie en direction de l'intérieur de la cuve. Chaque tuyau d'injection 33 comporte un ou deux perçages 34 au niveau de chaque croisement entre, d'une part, l'ondulation dans laquelle ledit tuyau d'injection 33 est logé et, d'autre part, une ondulation perpendiculaire à celle-ci. Les perçages 34 sont orientés en direction d'une ondulation perpendiculaire à l'ondulation dans laquelle le tuyau d'injection 33 est logé et permettent ainsi de conduire le gaz traceur vers la série d'ondulations perpendiculaires à l'ondulation traversée. Ainsi, le gaz traceur se diffuse dans l'espace thermiquement isolant primaire au travers des réseaux d'ondulations de la membrane primaire 8.

Sur la figure 7, on observe la disposition des tuyaux d'injection 33 dans la barrière thermiquement isolante primaire de la paroi de fond 11 selon un mode de réalisation. Les flèches représentent la direction d'injection du gaz traceur au travers des perçages 34 ménagés dans les tuyaux d'injections. Un ou plusieurs tuyaux d'injection 33 sont disposés le long de chacun des bords de la paroi de fond 11 et comportent, au niveau de chaque croisement entre deux ondulations, au moins un perçage dirigé vers la paroi de cuve adjacente. Ces tuyaux d'injection 33 permettent ainsi de faire diffuser le gaz traceur de la paroi de fond 11 en direction des autres parois de cuve.

Par ailleurs, dans le mode de réalisation représenté, la barrière thermiquement isolante de la paroi de fond 11 comporte une ou deux séries de tuyaux d'injection 33 qui sont chacune disposées dans une ondulation de la membrane primaire de la paroi de fond 11 qui est orienté selon la direction longitudinale de la cuve et est disposé dans une zone médiane de la paroi de fond 11. Les tuyaux d'injection 33 précités comportent deux perçages 34 orientés selon deux directions opposées, au niveau de chaque croisement entre l'ondulation dans laquelle ledit tuyau d'injection 33 est logé et une ondulation perpendiculaire à celle-ci.

### Contrôle de la diffusion du gaz traceur

De manière avantageuse, lorsque le gaz traceur a diffusé au travers de l'espace thermiquement isolant, l'on contrôle la diffusion du gaz traceur dans l'espace thermiquement isolant.

Pour ce faire, l'on prélève le gaz contenu dans l'espace thermiquement isolant dans lequel l'on a injecté le gaz traceur au moyen d'une pluralité de dispositifs de prélèvement de gaz ménagés au travers de la membrane recouvrant ledit espace thermiquement isolant. Chaque dispositif de prélèvement est relié à un équipement d'analyse, tel qu'un spectromètre de masse, qui permet de vérifier la présence et la concentration du gaz traceur dans la zone correspondante de l'espace thermiquement isolant.

De manière avantageuse, au moins un dispositif de prélèvement de gaz est disposé sur chacune des parois de cuve 9, 10, 11, 12, 13, 14, 15, 16. Les dispositifs de prélèvement de gaz sont avantageusement disposés à proximité des zones d'angle entre les parois de cuve, car ces zones sont les plus difficiles d'accès pour le gaz traceur en raison des structures particulières des barrières thermiquement isolantes dans ces zones.

En relation avec les figures 12 et 13, l'on décrit un dispositif de prélèvement de gaz permettant de prélever du gaz dans l'espace thermiquement isolant primaire au travers d'une membrane primaire 8.

Comme représenté sur la figure 12, la membrane primaire 8 présente à la jonction entre deux tôles métalliques 38, 39 adjacentes une zone dépourvue de soudure 40. Le dispositif de prélèvement de gaz 35 comporte une plaque de recouvrement 41, représentée sur la figure 13, qui est associée à la membrane primaire 8 au moyen d'un cordon de mastic 42 étanche. Le cordon de mastic 42 entoure la zone dépourvue de soudure 40. La plaque de recouvrement 41 présente un trou 43 et supporte un raccord tubulaire 44 qui est soudé de manière étanche en périphérie du trou 43. Le raccord tubulaire 44 est destiné à être raccordé à un conduit relié à l'équipement d'analyse.

En relation avec les figures 14 et 15, l'on décrit un dispositif de prélèvement de gaz 45 permettant de prélever du gaz dans l'espace thermiquement isolant secondaire au travers d'une membrane secondaire 5. Un tel dispositif de prélèvement de gaz 45 est disposé dans une zone de la membrane secondaire 5 destinée à être traversée par un organe d'ancrage passant au travers de la membrane secondaire 5 et assurant la fixation des panneaux isolants primaires 7 de la barrière thermiquement isolante primaire 6 sur la barrière thermiquement isolante secondaire 2. Le dispositif de prélèvement 45 comporte un organe de raccordement 46 qui présente un embout 47 destiné à être raccordé de manière étanche à un conduit relié à l'équipement d'analyse. L'organe de raccordement présente également une tige inférieure 48 filetée qui est vissée dans un alésage fileté 49 destiné à recevoir par la suite, lors de l'installation de la barrière thermiquement isolante primaire 6, un organe d'ancrage d'un panneau isolant primaire 7 de la barrière thermiquement isolante primaire 6. L'alésage fileté 49 est par exemple ménagé dans une platine métallique 50 qui est fixée sur un panneau isolant secondaire 3. Par ailleurs, l'organe de raccordement 45 présente un joint d'étanchéité annulaire 52 qui est enfilé sur la tige inférieure 48 et un épaulement 51 qui est configuré pour plaquer le joint d'étanchéité annulaire 52 contre la face intérieure de la membrane secondaire 5 de manière à assurer l'étanchéité du dispositif de prélèvement de gaz 45. L'organe de raccordement 46 présente également un perçage 53 qui débouche, d'une part, au niveau de l'embout 47 et d'autre part, dans l'espace thermiquement isolant secondaire.

Lorsque la concentration de gaz traceur atteint un seuil de concentration minimum pour chaque zone de prélèvement, l'étape de vérification de l'étanchéité des soudures peut alors être mise en oeuvre.

En outre, selon un mode de réalisation, la concentration en gaz traceur dans les zones de prélèvement est régulièrement contrôlée pendant la vérification de l'étanchéité des soudures afin de déterminer si la concentration de gaz traceur descend en dessous du seuil de concentration minimum. Dans un tel cas, du gaz traceur peut être de nouveau injecté dans l'espace thermiquement isolant afin que la concentration en gaz traceur redevienne supérieure audit seuil de concentration minimum.

### Vérification de l'étanchéité des soudures

Afin de vérifier l'étanchéité des cordons de soudure d'une membrane 5, 8, l'on utilise un dispositif de détection de fuite 54, tel que représenté sur la figure 15.

Le dispositif de détection de fuite 54 comporte une cloche de détection 55 qui est destinée à être disposée contre la face interne de la membrane 5, 8 en regard d'une portion du cordon de soudure à tester.

La cloche de détection 55 présente une forme allongée et présente une longueur comprise entre 0,5 et 3 m, par exemple de l'ordre de 1 m.

Comme représenté sur la figure 16, la cloche de détection 55 comporte un noyau central 59 rigide et un joint d'étanchéité 60 souple qui sont fixés l'un à l'autre et qui sont agencés pour définir avec la membrane 5, 8 à tester une chambre de détection 61 étanche, disposée en regard de la portion du cordon de soudure 62 à tester.

En revenant à la figure 15, l'on observe que le dispositif de détection de fuite 54 comporte également un équipement d'analyse 56 qui est raccordé à la chambre de détection 61 et permet de détecter le gaz traceur. Dès lors que l'équipement d'analyse 56 détecte du gaz traceur dans une quantité supérieure à un seuil, il peut être conclu à un défaut d'étanchéité de la portion du cordon de soudure 62 testée. Selon un mode de réalisation, l'équipement d'analyse 56 est un spectromètre de masse.

Le dispositif de détection de fuite 54 comporte également une pompe à vide 57 qui est associée audit équipement d'analyse 56. La pompe à vide 57 est raccordée, d'une part, à la chambre de détection de la cloche de détection 55 de manière à permettre une mise en dépression de la chambre de détection et, d'autre part, à l'équipement d'analyse 56 de manière à conduire le gaz contenu dans la chambre de détection 61 vers l'équipement d'analyse 56.

La pompe à vide 57 est reliée à la cloche de détection 55 via un tuyau 58 qui est de préférence flexible. Le tuyau 58 est raccordé à un canal qui est ménagé dans le noyau central 59 et débouche dans la chambre de détection 61.

Comme représenté sur les figures 16 et 17, le joint d'étanchéité 60 comporte une enveloppe 63 épousant la forme du noyau central 59 et une lèvre d'étanchéité périphérique 64 qui prolonge l'enveloppe 63 vers le bas. L'enveloppe présente un fond 63 qui recouvre la surface supérieure du noyau central 59 et une paroi périphérique 74 qui épouse la périphérie du noyau central 59. Le fond 63 présente au moins un trou, non représenté, auquel est raccordé de manière étanche le tuyau 58 relié à la pompe à vide 57.

La lèvre d'étanchéité périphérique 64 est recourbée vers l'extérieur de la cloche de détection 55 et est ainsi configurée pour se fléchir et se plaquer contre la membrane 5, 8 lorsque la chambre étanche 61 est mise en dépression. En d'autres termes, la lèvre d'étanchéité périphérique 64 présente une section présentant une forme générale de L.

La portion recourbée vers l'extérieur de la lèvre d'étanchéité périphérique 64 présente une largeur de l'ordre de 15 à 40 mm. La lèvre d'étanchéité périphérique 64 est conformée pour s'adapter à la géométrie de la membrane 5, 8 le long du cordon de soudure à tester. Aussi, sur la figure 17, la lèvre d'étanchéité périphérique 64 comporte des échancrures 65 présentant une forme correspondant à celle des ondulations de la membrane 5, 8 que la cloche de détection 55 est destinée à enjamber lorsqu'elle est en position contre la portion du cordon de soudure 62 à tester.

Le joint d'étanchéité 60 est avantageusement réalisé dans un matériau élastomère présentant une dureté comprise entre 20 et 50 Shore A. Le joint d'étanchéité est par exemple réalisé en polyuréthane élastomère, en silicone, en nitrile ou en Viton ^{®}.

Dans un mode de réalisation illustré schématiquement sur la figure 18, la cloche de détection 55 est en outre équipée d'un système de serrage 66 apte à plaquer la lèvre d'étanchéité périphérique 64 contre la membrane 8 à tester de manière à garantir l'étanchéité de la chambre de détection 61. Le système de serrage 66 comporte ici une pince 67 au niveau de chacune des échancrures 65 de la lèvre d'étanchéité périphérique 64. Chaque pince 67 comporte deux branches respectivement disposées de part et d'autre de l'échancrure 65 et configurées pour venir appliquer un effort de serrage de la lèvre d'étanchéité périphérique 64 contre la membrane 8. De manière avantageuse, les branches sont configurées pour serrer la lèvre d'étanchéité périphérique 64 contre la membrane d'étanchéité, à proximité de la base de l'ondulation.

Par ailleurs, dans le mode de réalisation représenté, le système de serrage 67 comporte en outre, au niveau de chacune des extrémités longitudinales de la cloche de détection 55, un doigt 68, mobile, qui est configuré pour venir plaquer l'une des extrémités longitudinales de la lèvre d'étanchéité périphérique 64 contre la membrane 8.

La figure 22 illustre un joint d'étanchéité 60 selon un mode de réalisation alternatif. Ce joint d'étanchéité 60 est conformé pour s'adapter à une membrane 5 dans laquelle les ondulations font saillie vers l'extérieur de la cuve. Une telle membrane est par exemple une membrane secondaire 5 selon la technologie Mark V, telle qu'illustrée sur la figure 6. Aussi, la lèvre d'étanchéité périphérique 64 comporte des zones en saillie 69 destinées à venir s'insérer à l'intérieur des ondulations de la membrane 5.

La procédure pour détecter un défaut d'étanchéité d'un cordon de soudure est la suivante.

Dans un premier temps l'on dispose la cloche de détection 55 en regard de la portion du cordon de soudure 62 à tester, tel que représenté sur la figure 20.

Il convient de s'assurer que la cloche de détection 55 est convenablement centrée par rapport au cordon de soudure 62 de sorte que les deux parties latérales de la portion recourbée de la lèvre d'étanchéité périphérique 64 soient disposées de part et d'autre du cordon de soudure 62.

La pompe à vide 57 est alors mise en fonctionnement afin de mettre la chambre de détection 61 en dépression et favoriser la migration du gaz traceur au travers des zones défectueuses du cordon de soudure 62.

Dès que la pression à l'intérieur de la chambre de détection 61 passe en dessous d'un seuil de pression Ps, un flux de gaz est conduit de la chambre de détection 61 vers l'équipement d'analyse 56 et un taux de fuite ϕ en gaz traceur est mesuré pendant une durée minimale Tm. Le taux de fuite ϕ est alors comparé à un seuil ϕs.

Si le taux de fuite ϕ est inférieur au seuil ϕs, alors il est conclu que la portion testée du cordon de soudure 62 ne présente pas de défaut d'étanchéité. Dans ce cas, la cloche de détection 55 est alors disposée en regard d'une portion adjacente du cordon de soudure 62 en assurant un recouvrement entre les deux portions successivement testées de manière à garantir que l'étanchéité du cordon de soudure 62 ait été testée sur toute la longueur dudit cordon de soudure 62.

Au contraire, si le taux de fuite ϕ est supérieur ou égal au seuil ϕs, alors il est conclu que la portion testée du cordon de soudure 62 présente un défaut d'étanchéité. Des mesures de soudure correctives sont alors mise en œuvre afin de corriger le défaut.

A titre d'exemple, pour une concentration en hélium dans l'espace thermiquement isolant de l'ordre de 20 %, le seuil de pression en dessous duquel le taux de fuite est mesuré est compris entre 50 et 1000 Pa absolu, par exemple de l'ordre de 100 Pa absolu, la durée minimale de mesure du taux de fuite est de 5 secondes et le seuil ϕs est de l'ordre de 1,0.10⁻⁶ Pa.m³.s⁻¹.

La figure 21 représente un dispositif de détection de fuite 54 selon un autre mode de réalisation. Ce mode de réalisation diffère du mode de réalisation décrit précédemment en ce qu'il comporte en outre une chambre d'homogénéisation 70 qui est disposée entre la chambre de détection 61 et l'équipement d'analyse 56 et en ce que la cloche de détection 55 comporte une entrée de gaz 71.

L'entrée de gaz 71 est équipée d'un robinet permettant d'établir ou d'interrompre un écoulement d'air ambiant vers la chambre de détection 61. La chambre d'homogénéisation 70 est raccordée à une extrémité de la chambre de détection 61 tandis que l'entrée de gaz 71 est raccordée à l'extrémité opposée de la chambre de détection 61.

Le mode de fonctionnement du dispositif de détection de fuite est le suivant.

Lorsque la cloche de détection 55 est disposée en regard de la portion du cordon de soudure 62 à tester, le robinet de l'entrée de gaz 71 est fermé et la pompe à vide 57 est mise en fonctionnement afin de mettre la chambre de détection 61 en dépression. Dès que la pression à l'intérieur de la chambre de détection 61 passe en dessous d'un seuil de pression Ps, le robinet de l'entrée de gaz 71 est ouvert et l'ensemble du gaz préalablement contenu dans la chambre étanche est transféré vers la chambre d'homogénéisation 70. La chambre d'homogénéisation 70 présente un volume supérieur à celui de de la chambre de détection 61 et comporte par exemple un système de piston permettant d'aspirer précisément l'intégralité du gaz contenu dans la chambre de détection 61.

Le gaz contenu dans la chambre d'homogénéisation 71 est ensuite transféré en direction de l'équipement d'analyse 56 afin de déterminer un taux de fuite ϕ en gaz traceur.

Un tel mode de réalisation est avantageux en ce qu'il permet de diminuer le temps de diffusion du gaz traceur à l'intérieur de la cloche de détection 55 et permet ainsi de diminuer la durée minimale de mesure. Ceci est notamment avantageux lorsque le temps pour que le gaz traceur migre d'une extrémité à une autre de la cloche de détection 55 est susceptible d'être long en raison d'une longueur importante de la cloche de détection 55 et/ou lorsque la dépression régnant à l'intérieur de la chambre de détection 61 est insuffisante.

## Revendications

1. Procédé d'injection d'un gaz traceur dans un espace thermiquement isolant d'une cuve étanche et thermiquement isolante, la cuve étanche et thermiquement isolante présentant une forme polyédrique définie par une pluralité de parois de cuve (9, 10, 11, 12, 13, 14, 15, 16, 17 ) qui sont fixées sur une structure porteuse (4), chacune des parois de cuve comportant une barrière thermiquement isolante (2, 6) comprenant des éléments isolants (3, 7) ancrés à la structure porteuse (4) et une membrane (5, 8) reposant contre les éléments isolants (3, 7) de la barrière thermiquement isolante (2, 6), la barrière thermiquement isolante (2, 6) de chaque paroi de cuve communicant avec la barrière thermiquement isolante (2, 6) des autres parois de cuve (9, 10, 11, 12, 13, 14, 15, 16, 17) et définissant ensemble l'espace thermiquement isolant ; ladite pluralité de parois de cuve incluant une paroi de fond (11), ledit procédé d'injection comportant injecter un gaz traceur dans l'espace thermiquement isolant au moyen d'au moins un dispositif d'injection de gaz traceur (19, 28) qui débouche dans la barrière thermiquement isolante (2, 6) de la paroi de fond (11), le procédé étant **caractérisé en ce que** le dispositif d'injection de gaz traceur (19, 28) traverse la membrane (5, 8) de la paroi de fond (11), **en ce que** le gaz traceur est introduit et transporté depuis l'espace interne de la cuve vers ledit espace thermiquement isolant, et **en ce que** préalablement à l'étape d'injecter du gaz traceur au moyen d'au moins un dispositif d'injection de gaz traceur (19), l'on décolle la membrane (5, 8) de la barrière thermiquement isolante (2, 6) dans la zone du dispositif d'injection du gaz traceur (19) en introduisant un outil de levage (25) au travers d'un trou (20) ménagé dans la membrane (5, 8) et en positionnant ledit outil de levage (25) de telle sorte à être intercalé entre la membrane (5, 8) et la barrière thermiquement isolante (2, 6) de la paroi de fond (11).

2. Procédé selon la revendication 1, dans lequel le gaz traceur est choisi parmi l'hélium, l'ammoniac et un mélange d'azote et de dihydrogène.

3. Procédé selon la revendication 1 ou 2, dans lequel la paroi de fond (11) présente une forme rectangulaire présentant deux axes de symétries, lesdits deux axes de symétrie délimitant quatre zones de la paroi de fond et dans lequel l'on injecte le gaz traceur au moyen d'au moins quatre dispositifs d'injection de gaz traceur (19, 28) qui chacun traversent la membrane (5, 8) de la paroi de fond (11) et qui débouchent dans la barrière thermiquement isolante de la paroi de fond (11), chacune des quatre zones de la paroi de fond étant équipée équipées de l'un des quatre dispositifs d'injection de gaz traceur (19, 28).

4. Procédé selon l'une quelconque des revendications 1 à 3, dans lequel le ou chaque dispositif d'injection de gaz traceur (19, 28) comporte un organe de raccordement (22, 31) qui est soudé de manière étanche à la membrane (5, 8) de la paroi de fond (11) en périphérie d'un trou (20, 29) qui est ménagé dans ladite membrane (5, 8), l'organe de raccordement (22, 31) étant associé à un conduit (18) relié à une source de gaz traceur.

5. Procédé selon la revendication 4, dans lequel l'outil de levage (25) est introduit au travers de l'organe de raccordement (22) et du trou (20) ménagé dans la membrane (5, 8) et est positionné de telle sorte qu'un crochet (27) dudit outil de levage (25) soit intercalé entre la membrane (5, 8) et la barrière thermiquement isolante (2, 6) de la paroi de fond (11).

6. Procédé de test de l'étanchéité d'une membrane d'une cuve étanche et thermiquement isolante, la cuve étanche et thermiquement isolante présentant une forme polyédrique définie par une pluralité de parois de cuve (9, 10, 11, 12, 13, 14, 15, 16, 17 ) qui sont fixées sur une structure porteuse (4), chacune des parois de cuve comportant une barrière thermiquement isolante (2, 6) comprenant des éléments isolants (3, 7) ancrés à la structure porteuse (4) et une membrane (5, 8) reposant contre les éléments isolants (3, 7) de la barrière thermiquement isolante (2, 6), les barrières thermiquement isolantes (2, 6) des parois de cuve communicant les unes avec les autres et définissant ensemble un espace thermiquement isolant ; ladite pluralité de parois de cuve incluant une paroi de fond (11), le procédé de test de l'étanchéité comportant:
- mettre en œuvre le procédé d'injection d'un gaz traceur selon l'une quelconque des revendications 1 à 5 afin d'injecter du gaz traceur dans l'espace thermiquement isolant ;
- fournir un dispositif de détection de fuite (54) comprenant une cloche de détection (55) configurée pour définir avec la membrane (5, 8) une chambre de détection étanche (61) et une pompe à vide (57) qui est, d'une part, raccordée à la chambre de détection (61) et, d'autre part, à un équipement d'analyse (56) ;
- disposer la cloche de détection (55) contre une face de la membrane (5, 8) opposée à l'espace thermiquement isolant, la cloche de détection (55) étant disposée de manière à ce que la chambre de détection étanche (61) soit disposée en regard d'une portion d'un cordon de soudure (62) à tester ;
- mettre en dépression la chambre de détection (61) au moyen de la pompe à vide (57) ;
- conduire la phase gazeuse contenue dans la chambre de détection étanche (61) vers l'équipement d'analyse (56) ; et
- analyser au moyen de l'équipement d'analyse (56) ladite phase gazeuse et délivrer une variable représentative d'une concentration de gaz traceur dans ladite phase gazeuse.

7. Procédé de test de l'étanchéité d'une membrane selon la revendication 6, dans lequel la cloche de détection (55) comporte un noyau central (59) et un joint d'étanchéité (60) qui sont fixés l'un à l'autre et sont agencés pour définir avec la membrane (5, 8) la chambre de détection (61).

8. Procédé de test de l'étanchéité d'une membrane selon la revendication 7, dans lequel le joint d'étanchéité (60) comporte une enveloppe (63) fixée au noyau central (59) et une lèvre d'étanchéité périphérique (64) qui prolonge l'enveloppe (63).

9. Procédé de test de l'étanchéité d'une membrane selon la revendication 7 ou 8, dans lequel la lèvre d'étanchéité périphérique (64) est recourbée vers l'extérieur de la cloche de détection (55) et est configurée pour se fléchir et se plaquer contre la membrane (5, 8) lorsque la chambre de détection (61) est mise en dépression.

10. Procédé de test de l'étanchéité d'une membrane selon l'une quelconque des revendications 7 à 9, dans lequel la portion du cordon de soudure (62) est traversée par au moins une ondulation de la membrane et dans lequel la lèvre d'étanchéité périphérique (64) est conformée pour s'adapter à la géométrie de ladite ondulation.

11. Procédé de test de l'étanchéité d'une membrane selon la revendication 10, dans lequel l'au moins une ondulation de la membrane (8) fait saillie vers l'intérieur de la cuve et dans lequel la lèvre d'étanchéité périphérique (64) comporte au moins deux échancrures (65) présentant une forme correspondant à celle de l'ondulation, la cloche de détection (55) étant disposée contre la membrane (8) de manière à ce que les échancrures (65) enjambent l'ondulation.

12. Procédé de test de l'étanchéité d'une membrane selon la revendication 10, dans lequel l'au moins une ondulation de la membrane (5, 8) fait saillie vers l'extérieur de la cuve et dans lequel la lèvre d'étanchéité périphérique (64) comporte au moins deux zones en saillie (69) présentant une forme correspondant à celle de l'ondulation, la cloche de détection (55) étant disposée contre la membrane (5) de manière à ce que les zones en saillie s'insèrent dans l'ondulation.

13. Procédé de test de l'étanchéité d'une membrane selon l'une quelconque des revendications 7 à 12, dans lequel le joint d'étanchéité (60) est réalisé dans un matériau élastomère présentant une dureté comprise entre 20 et 50 Shore A.

14. Procédé de test de l'étanchéité d'une membrane selon l'une quelconque des revendications 7 à 13, dans lequel la cloche de détection (55) est équipée d'un système de serrage (66) apte à plaquer la lèvre d'étanchéité périphérique (64) contre la membrane (8) et dans lequel, préalablement à la mise en dépression de la chambre de détection (61), l'on actionne le système de serrage (66) de manière à garantir l'étanchéité de la chambre de détection (61).

15. Procédé de test de l'étanchéité d'une membrane selon l'une quelconque des revendications 6 à 14, dans lequel l'on met en dépression la chambre de détection (61) jusqu'à une valeur de pression absolue comprise entre 50 et 1000 Pa.

16. Procédé de test de l'étanchéité d'une membrane selon l'une quelconque des revendications 6 à 15, dans lequel le dispositif de détection de fuite comporte en outre une chambre d'homogénéisation (70) qui est disposée entre la chambre de détection (61) et l'équipement d'analyse (56), la cloche de détection (55) comportant une entrée de gaz (71) équipée d'un robinet, la chambre d'homogénéisation (70) et l'entrée de gaz (71) étant raccordées à deux extrémités opposées de la chambre de détection (61), le robinet de l'entrée de gaz (71) étant fermé lors de la mise en dépression de la chambre de détection (61), l'étape de conduire la phase gazeuse contenue dans la chambre de détection (61) comportant :
- ouvrir le robinet de l'entrée de gaz (71) et conduire la phase gazeuse contenue dans la chambre de détection (61) vers la chambre d'homogénéisation (70) ; et
- conduire la phase gazeuse de la chambre d'homogénéisation (70) vers l'équipement d'analyse (56).

## Patentansprüche

1. Verfahren zur Injektion eines Spürgases in einen wärmeisolierenden Bereich eines dichten und wärmeisolierenden Gefäßes, wobei das dichte und wärmeisolierende Gefäß eine polyedrische Form aufweist, welche durch eine Vielzahl von Gefäßwänden (9, 10, 11, 12, 13, 14, 15, 16, 17), welche auf einer Haltestruktur (4) angebracht sind, definiert wird, wobei jede der Gefäßwände eine wärmeisolierende Sperre (2, 6) umfasst, welche mit der Haltestruktur verbundene isolierende Elemente (3, 7) aufweist, und eine Membran, welche an den wärmeisolierenden Elementen (3, 7) der wärmeisolierenden Sperre (2, 6) anliegt, wobei die wärmeisolierende Sperre (2, 6) einer jeden Gefäßwand mit der wärmeisolierenden Sperre (2, 6) der anderen Gefäßwände (9, 10, 11, 12, 13, 14, 15, 16, 17) in Verbindung steht und zusammen den wärmeisolierenden Bereich definieren; wobei die Vielzahl der Gefäßwände eine Bodenwand (11) enthalten, wobei das Verfahren zur Injektion umfasst das Injizieren eines Spürgases in den wärmeisolierenden Bereich mittels mindestens einer Spürgasinjektionsvorrichtung (19, 28), welche in die wärmeisolierende Sperre (2, 6) der Bodenwand (11) mündet, wobei das Verfahren **dadurch gekennzeichnet ist, dass** die Spürgasinjektionsvorrichtung (19, 28) die Membran (5, 8) der Bodenwand (11) durchquert, und dadurch, dass das Spürgas vom inneren Bereich des Gefäßes hin zum wärmeisolierenden Bereich eingeführt und transportieret wird, und dadurch, dass vor dem Schritt des Injizierens des Spürgases mittels mindestens einer Spürgasinjektionsvorrichtung (19) die Membran (5, 8) der wärmeisolierenden Sperre (2, 6) in dem Bereich der Spürgasinjektionsvorrichtung (19) mittels eines Hebegerätes (25) durch eine in der Membran (5, 8) angeordnete Öffnung (20) gelöst wird, wobei das Hebegerät (25) so angeordnet wird, dass es zwischen der Membran (5, 8) und der wärmeisolierenden Sperre (2, 6) der Bodenwand (11) eingefügt wird.

2. Verfahren gemäß Anspruch 1, wobei das Spürgas ausgesucht wird zwischen Helium, Ammoniak und einer Mischung aus Stickstoff und Wasserstoff.

3. Verfahren gemäß Anspruch 1 oder 2, wobei die Bodenwand (11) eine rechteckige Form mit zwei Symmetrieachsen umfasst, wobei die beiden Symmetrieachsen vier Bereiche der Bodenwand abgrenzen und wobei das Spürgas mittels vier Spürgasinjektionsvorrichtungen (19, 28), welche jeweils die Membran (5, 8) der Bodenwand (11) durchqueren und in der wärmeisolierenden Sperre der Bodenwand (11) münden, injiziert wird, wobei jeder der vier Bereiche der Bodenwand ausgestattet ist mit einer der vier Spürgasinjektionsvorrichtungen (19, 28).

4. Verfahren gemäß einem der Ansprüche 1 bis 3, wobei die oder jede Spürgasinjektionsvorrichtung (19, 28) eine Verbindungsvorrichtung (22, 31), welche in dichter Weise mit der Membran (5, 8) der Bodenwand im Randbereich der Öffnung (20, 29), welche in der Membran angeordnet ist, verschweißt ist, umfasst, wobei die Verbindungsvorrichtung (22, 31) mit einer Leitung verbunden ist, welche mit einer Spürgasquelle verbunden ist.

5. Verfahren gemäß Anspruch 4, wobei das Hebegerät 825) durch die Verbindungsvorrichtung (22) und durch die in der Membran angeordneten Öffnung (20) eingeführt wird und so angeordnet wird, dass ein Haken (27) des Hebegerätes (25) zwischen der Membran (5, 8) und der wärmeisolierenden Sperre (2, 6) der Bodenwand (11) eingefügt wird.

6. Verfahren zur Dichtigkeitsprüfung einer Membran eines dichten und wärmeisolierenden Gefäßes, wobei das dichte und wärmeisolierende Gefäß eine polyedrische Form aufweist, welche durch eine Vielzahl von Gefäßwänden (9, 10, 11, 12, 13, 14, 15, 16, 17), welche auf einer Haltestruktur (4) angebracht sind, definiert wird, wobei jede der Gefäßwände eine wärmeisolierende Sperre (2, 6) umfasst, welche mit der Haltestruktur verbundene isolierende Elemente (3, 7) aufweist, und eine Membran, welche an den wärmeisolierenden Elementen (3, 7) der wärmeisolierenden Sperre (2, 6) anliegt, wobei die wärmeisolierenden Sperren (2, 6) der Gefäßwände miteinander in Verbindung stehen und zusammen den wärmeisolierenden Bereich definieren; wobei die Vielzahl der Gefäßwände eine Bodenwand (11) enthalten, wobei das Verfahren zur Dichtigkeitsprüfung umfasst:
- Verwirklichen des Verfahrens zur Injektion eines Spürgases gemäß einem der Ansprüche 1 bis 5, um das Spürgas in den wärmeisolierenden Bereich zu injizieren;
- Bereitstellen einer Vorrichtung zum Nachweis von Leckagen (54) umfassend eine glockenförmige Nachweisvorrichtung (55), konfiguriert um zusammen mit der Membran (5, 8) ein dichte Nachweiskammer (61) zu bilden, und eine Unterdruckpumpe (57), welche zum einen mit der Nachweiskammer (61) und zum anderen mit einem Analysegerät (56) verbunden ist;
- Anordnen der glockenförmigen Nachweisvorrichtung (55) gegen eine dem wärmeisolierenden Bereich gegenüberliegende Seite der Membran (5, 8), wobei die glockenförmige Nachweisvorrichtung (55) so angeordnet ist, dass die dichte Nachweiskammer (61) gegenüber einem Abschnitt einer zu testenden Schweißnaht angeordnet ist;
- Setzen der Nachweiskammer (61) mittels der Unterdruckpumpe (57) unter Unterdruck;
- Leiten der in der dichten Nachweiskammer (61) enthaltenen Gasphase zum Analysegerät (56); und
- Analysieren der Gasphase mittels des Analysegerätes (56) und Erzeugen einer repräsentativen Variablen einer Konzentration des Spürgases in der Gasphase.

7. Verfahren zur Dichtigkeitsprüfung einer Membran gemäß Anspruch 6, wobei die glockenförmige Nachweisvorrichtung (55) einen Zentralkern (59) und eine Dichtung (60) umfasst, welche miteinander verbunden sind und angeordnet sind, um zusammen mit der Membran die Nachweiskammer zu definieren.

8. Verfahren zur Dichtigkeitsprüfung einer Membran gemäß Anspruch 7, wobei die Dichtung (60) eine Hülle umfasst, welche auf dem Zentralkern (59) angebracht ist und eine umlaufende Dichtlippe (64), welche die Hülle verlängert.

9. Verfahren zur Dichtigkeitsprüfung einer Membran gemäß einem der Ansprüche 7 oder 8, wobei die umlaufende Dichtlippe (64) zum Äußeren der glockenförmigen Nachweisvorrichtung (55) gekrümmt ist und konfigurieret ist, um sich zu biegen und sich gegen die Membran zu drücken, wenn die Nachweiskammer (61) unter Unterdruck gesetzt wird.

10. Verfahren zur Dichtigkeitsprüfung einer Membran gemäß einem der Ansprüche 7 bis 9, wobei der Abschnitt der Schweißnaht von mindestens einer Welle der Membran durchkreuzt wird und wobei die umlaufende Dichtlippe (64) gebildet ist, um sich der Gestalt der Welle anzupassen.

11. Verfahren zur Dichtigkeitsprüfung einer Membran gemäß Anspruch 10, wobei die mindestens eine Welle der Membran (8) zum Inneren des Gefäßes hervorsteht und wobei die umlaufende Dichtlippe (64) mindestens zwei Aussparungen (65) umfasst, welche eine Form entsprechend der Form der Welle aufweisen, wobei die glockenförmige Nachweisvorrichtung (55) gegen die Membran (8) angeordnet ist, so dass die Aussparungen (65) die Welle überspannen.

12. Verfahren zur Dichtigkeitsprüfung einer Membran gemäß Anspruch 10, wobei die mindestens eine Welle der Membran (5, 8) zum Äußeren des Gefäßes hervorsteht und wobei die umlaufende Dichtlippe (64) mindestens zwei vorstehende Bereiche (69) umfasst, welche eine Form entsprechend der Form der Welle aufweisen, wobei die glockenförmige Nachweisvorrichtung (55) gegen die Membran (5) angeordnet ist, so dass sich die vorstehenden Bereiche in die Welle einfügen.

13. Verfahren zur Dichtigkeitsprüfung einer Membran gemäß einem der Ansprüche 7 bis 12, wobei die Dichtung (60) aus elastomerischem Material besteht, welche eine Härte zwischen 20 und 50 Shore A aufweist.

14. Verfahren zur Dichtigkeitsprüfung einer Membran gemäß einem der Ansprüche 7 bis 13, wobei die glockenförmige Erkennungsvorrichtung (55) mit einem Spannsystem (66) ausgestattet ist, welches dazu geeignet ist, die umlaufende Dichtlippe (64) gegen die Membran (8) zu drücken und wobei, vor dem Setzen der Nachweiskammer (61) unter Unterdruck das Spannsystem (66) betätigt wird, um die Dichtigkeit der Nachweiskammer (61) zu garantieren.

15. Verfahren zur Dichtigkeitsprüfung einer Membran gemäß einem der Ansprüche 6 bis 14, wobei die Nachweiskammer (61) unter Unterdruck bis zu einem Absolutdruckwert zwischen 50 und 1000 Pa gesetzt wird.

16. Verfahren zur Dichtigkeitsprüfung einer Membran gemäß einem der Ansprüche 6 bis 15, wobei die Vorrichtung zum Nachweis von Leckagen weiterhin umfasst eine Homogenisierungskammer (70), welche zwischen der Nacheiskammer (61) und dem Analysegerät (56) angeordnet ist, wobei die glockenförmige Nachweisvorrichtung (55) einen Gaseinlass (71) umfasst, welcher mit einem Hahn ausgestattet ist, wobei die Homogenisierungskammer (70) und der Gaseinlass (71) an zwei gegenüberliegenden Enden der Nachweiskammer (61) angebracht sind, wobei der Hahn des Gaseinlasses (71) geschlossen ist, wenn die Nachweiskammer (61) unter Unterdruck gesetzt wird, wobei der Schritt des Leitens der in der dichten Nachweiskammer (61) enthaltenen Gasphase umfasst:
- Öffnen des Hahns des Gaseinlasses (71
- und Leiten der in der Nachweiskammer (61) enthaltenen Gasphase zu der Homogenisierungskammer (70); und
- Leiten der Gasphase der Homogenisierungskammer (70) zum Analysegerät (56).

## Claims

1. Method for injection of a tracer gas into a thermally insulating space of a leaktight and thermally insulating tank, the leaktight and thermally insulating tank exhibiting a polyhedral shape defined by a plurality of tank walls (9, 10, 11, 12, 13, 14, 15, 16, 17) which are attached to a carrier structure (4), each of the tank walls comprising a thermally insulating barrier (2, 6) comprising insulating elements (3, 7) which are anchored to the carrier structure (4) and a membrane (5, 8) resting against the insulating elements (3, 7) of the thermally insulating barrier (2, 6), the thermally insulating barrier (2, 6) of each tank wall communicating with the thermally insulating barrier (2, 6) of the other tank wall (9, 10, 11, 12, 13, 14, 15, 16, 17) one another and together defining the thermally insulating space; the said plurality of tank walls including a bottom wall (11), the said injection method comprising injecting a tracer gas into the thermally insulating space by means of at least one device for injection of tracer gas (19, 28) which emerges in the thermally insulating barrier (2, 6) of the bottom wall (11), the method being **characterized in that** the device for injection of tracer gas (19, 28) passes through the membrane (5, 8) of the bottom wall (11), **in that** the tracer gas is introduced and transported from the inner space of the vessel to said thermally insulating space and **in that**, prior to the stage of injection of the tracer gas by means of at least one device for injection of tracer gas (19), the membrane (5, 8) is detached from the thermally insulating barrier (2, 6) in the region of the device for injection of the tracer gas (19) by introducing a lifting tool (25) through a hole (20) made in the membrane (5, 8) and by positioning said lifting tool (25) so as to be interposed between the membrane (5, 8) and the thermally insulating barrier (2, 6) of the bottom wall (11).

2. Method according to Claim 1, in which the tracer gas is chosen from helium, ammonia and a mixture of nitrogen and molecular hydrogen.

3. Method according to Claim 1 or 2, in which the bottom wall (11) exhibits a rectangular shape exhibiting two axes of symmetry, the said two axes of symmetry delimiting four regions of the bottom wall, and in which the tracer gas is injected by means of at least four devices for injection of tracer gas (19, 28) which each pass through the membrane (5, 8) of the bottom wall (11) and which emerge in the thermally insulating barrier of the bottom wall (11), each of the four regions of the bottom wall being equipped with one of the four devices for injection of tracer gas (19, 28).

4. Method according to any one of Claims 1 to 3, in which the or each device for injection of tracer gas (19, 28) comprises a coupling member (22, 31) which is welded in leaktight fashion to the membrane (5, 8) of the bottom wall (11) at the periphery of a hole (20, 29) which is made in the said membrane (5, 8), the coupling member (22, 31) being combined with a pipe (18) connected to a source of tracer gas.

5. Method according to Claim 4, in which, the lifting tool (25) is introduced through the coupling member (22) and the hole (20) made in the membrane (5, 8) and is positioned so that a hook (27) of the said lifting tool (25) is inserted between the membrane (5, 8) and the thermally insulating barrier (2, 6) of the bottom wall (11).

6. Method for testing the leaktightness of a membrane of a leaktight and thermally insulating tank, the leaktight and thermally insulating tank exhibiting a polyhedral shape defined by a plurality of tank walls (9, 10, 11, 12, 13, 14, 15, 16, 17) which are attached to a carrier structure (4), each of the tank walls comprising a thermally insulating barrier (2, 6) comprising insulating elements (3, 7) which are anchored to the carrier structure (4) and a membrane (5, 8) resting against the insulating elements (3, 7) of the thermally insulating barrier (2, 6), the thermally insulating barriers (2, 6) of the tank walls communicating with one another and together defining a thermally insulating space; the said plurality of tank walls including a bottom wall (11), the method for testing the leaktightness comprising:
- carrying out the method for injection of a tracer gas according to any one of Claims 1 to 5 in order to inject the tracer gas into the thermally insulating space;
- providing a leak detection device (54) comprising a detection hood (55), configured in order to define, with the membrane (5, 8), a leaktight detection chamber (61), and a vacuum pump (57) which is, on the one hand, coupled to the leaktight detection chamber (61) and, on the other hand, to an analytical apparatus (56);
- positioning the detection hood (55) against a face of the membrane (5, 8) opposite the thermally insulating space, the detection hood (55) being positioned so that the leaktight detection chamber (61) is positioned facing a portion of a welding bead (62) to be tested;
- placing the detection chamber (61) under negative pressure using the vacuum pump (57);
- conveying the gas phase present in the detection chamber (61) towards the analytical apparatus (56); and
- analysing, using the analytical apparatus (56), the said gas phase and delivering a variable representative of a concentration of tracer gas in the said gas phase.

7. Method for testing the leaktightness of a membrane according to Claim 6, in which the detection hood (55) comprises a central core (59) and a leaktightness seal (60) which are attached to one another and are arranged in order to define, with the membrane (5, 8), the detection chamber (61).

8. Method for testing the leaktightness of a membrane according to Claim 7, in which the leaktightness seal (60) comprises a casing (63) attached to the central core (59) and a peripheral leaktightness lip (64) which extends the casing (63).

9. Method for testing the leaktightness of a membrane according to Claim 7 or 8, in which the peripheral leaktightness lip (64) is bent towards the outside of the detection hood (55) and is configured in order to be flexed and to be flattened against the membrane (5, 8) when the detection chamber (61) is placed under negative pressure.

10. Method for testing the leaktightness of a membrane according to any one of Claims 7 to 9, in which the portion of the welding bead (62) is traversed by at least one corrugation of the membrane and in which the peripheral leaktightness lip (64) is shaped in order to fit the geometry of the said corrugation.

11. Method for testing the leaktightness of a membrane according to Claim 10, in which the at least one corrugation of the membrane (8) projects towards the inside of the tank and in which the peripheral leaktightness lip (64) comprises at least two indentations (65) exhibiting a shape corresponding to that of the corrugation, the detection hood (55) being positioned against the membrane (8) so that the indentations (65) straddle the corrugation.

12. Method for testing the leaktightness of a membrane according to Claim 10, in which the at least one corrugation of the membrane (5, 8) projects towards the outside of the tank and in which the peripheral leaktightness lip (64) comprises at least two regions in projection (69) exhibiting a shape corresponding to that of the corrugation, the detection hood (55) being positioned against the membrane (5) so that the regions in projection are inserted into the corrugation.

13. Method for testing the leaktightness of a membrane according to any one of Claims 7 to 12, in which the leaktightness seal (60) is made of an elastomer material exhibiting a Shore A hardness of between 20 and 50.

14. Method for testing the leaktightness of a membrane according to any one of Claims 7 to 13, in which the detection hood (55) is equipped with a clamping system (66) capable of flattening the peripheral leaktightness lip (64) against the membrane (8) and in which, prior to placing the detection chamber (61) under negative pressure, the clamping system (66) is actuated so as to guarantee the leaktightness of the detection chamber (61).

15. Method for testing the leaktightness of a membrane according to any one of Claims 6 to 14, in which the detection chamber (61) is placed under negative pressure down to an absolute pressure value of between 50 and 1000 Pa.

16. Method for testing the leaktightness of a membrane according to any one of Claims 6 to 15, in which the leak detection device additionally comprises a homogenization chamber (70) which is positioned between the detection chamber (61) and the analytical apparatus (56), the detection hood (55) comprising a gas inlet (71) equipped with a valve, the homogenization chamber (70) and the gas inlet (71) being coupled to two opposite ends of the detection chamber (61), the valve of the gas inlet (71) being closed during the placing of the detection chamber (61) under negative pressure, the stage of conveying the gas phase present in the detection chamber (61) comprising:
- opening the valve of the gas inlet (71) and conveying the gas phase present in the detection chamber (61) towards the homogenization chamber (70); and
- conveying the gas phase from the homogenization chamber (70) towards the analytical apparatus (56).
